(19) **Europäisches Patentamt / European Patent Office / Office européen des brevets**

(11) **EP 4 382 742 B1**

(12) **EUROPEAN PATENT SPECIFICATION**

(45) Date of publication and mention of the grant of the patent:
**26.11.2025 Bulletin 2025/48**

(21) Application number: **21952669.6**

(22) Date of filing: **06.08.2021**

(51) International Patent Classification (IPC):
**F03D 1/06** (2006.01)

(52) Cooperative Patent Classification (CPC):
**F03D 1/0677; F03D 1/0679;** F05B 2240/302; F05B 2280/5001; F05B 2280/6003; Y02E 10/72

(86) International application number:
**PCT/ES2021/070600**

(87) International publication number:
**WO 2023/012385 (09.02.2023 Gazette 2023/06)**

(54) **TRANSITION FOR COMPOSITE LAMINATES FOR A MODULAR BLADE**

ÜBERGANG FÜR VERBUNDLAMINATE FÜR EINE MODULARE KLINGE

TRANSITION SUR STRATIFIÉS EN MATÉRIAU COMPOSITE POUR PALE MODULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.06.2024 Bulletin 2024/24**

(73) Proprietor: **Nabrawind Technologies, S.L.**
**31002 Pamplona (ES)**

(72) Inventors:
• **CALLEN ESCARTÍN, Javier**
22005 Huesca (ES)
• **SANZ PASCUAL, Eneko**
31002 Pamplona (ES)
• **MONREAL LESMES, Javier**
31180 Zizur Mayor (ES)
• **MAYOR MORENO, Luis Alberto**
28026 Madrid (ES)

(74) Representative: **Ezcurra Zufia, Maria Antonia**
Iparraguirre, 15 - 2° A
48009 Bilbao (ES)

(56) References cited:
EP-A1- 3 093 485          EP-A1- 3 653 872
EP-A1- 3 808 972          WO-A1-2020/119874
WO-A2-2013/010979      US-A1- 2011 142 662
US-A1- 2014 271 198      US-A1- 2014 271 198
US-A1- 2018 245 566

**Description**

Field of invention

The invention is within the field of parts used in a modular blade, and more specifically the improvement of the load transfer between laminates with relevant increases in width and thickness of the beam flange (cap) necessary to accommodate joining metallic elements that do not fit in the original cap.

Background

Many of the concepts used to modularize wind blades are based on the introduction of metal elements in the cap of the beam in order to later create a screwed connection between them. **In** this way, the metal elements and their screwed connection give structural continuity to said cap of the beam.

However, beam caps are narrow and thin (typically 300 to 600 mm wide and 20 to 50 mm thick). Therefore, to accommodate the sufficient metal elements to provide said structural continuity, it is necessary to thicken said cap in width and thickness.

The final position of these metallic elements in the joining section and the design of the transition of the laminate between the cap of the original beam and said joining section cause a distribution of loads in each of said metallic elements. The usual transition based on laminate thickening is very inefficient because it causes an unwanted overload in the central metal elements and an undesirable relaxation in the lateral metal elements.

Composite laminates are selected based on the loads they will support. Structural fibers (mainly carbon CF and glass GF in wind blades) are materials that can be applied in different orientations and in different combinations depending on the load they need to support.

Different materials are also mixed or reinforced by adding plastics, metals, etc.

The report WMC-2017-109 "Connection methods in wind turbine rotor blades" describes fiber and metal laminates to accumulate sufficient resistance to incorporate metal screws in said laminate. They are specially designed to solve the stress of the T-bolts of the blade root, without substantially modifying the different reactions along the width of the joint.

Patent EP1664528 presents a laminate of fiberglass FG and carbon fiber CF in a ratio of 7 to 1 that, to compensate for the conductive lack of the glass fiber, adds a receiver glued to a laminate of steel fibers. This leaves 7 FG laminates, 1 CF laminate and conductive steel fibers, without modifying the load reaction along the width of the joint. Patent EP2507508 shows the stringer used in a modular blade made of composite material reinforced with carbon fibers that gives it rigidity and strength while being light. A reinforcing block is arranged at the end of the spar. A laminate with several reinforced layers oriented transversely to the longitudinal direction of the stringer. One or more layers of fibers are wound around the stack, gradually increasing to form a transition zone, without using in any case a hybrid laminate of variable stiffness that modifies the response of the section along the width.

Patent EP176170 shows the thickened joint of a modular blade where the standard FG is reinforced with woven CF or placed along its length, before the resin is applied. They extend continuously. **It** also shows combinations in continuous strips of CF and strips of wood or FV, joined by resin injection or by vacuum infusion, with definitions of continuous laminates in the width of the joint and therefore without rigidity transitions. Patent WO2020119874A1 improves the stability and stiffness of the blade by preventing the shear webs from connecting across the joint. Additionally, the shear webs can be branched, which increases the structural stiffness and distributes the shear loads more efficiently.

Patent US2014271198A1 describes a segmented blade with multi-component spar caps made from layers of different materials. The blade segments are joined by spar joints, which transmit loads between the sections. Additionally, shear webs and ribs are used to reinforce the structure.

Hybrid laminates are known and varied. Each combination responds to specific needs such as the case of the transition of laminates with increased width, object of the invention, which achieves by adjusting the rigidity of the laminate along the width of the joint that the section does not behave like a flat section but also that the level of load reaction can be adjusted along its width.

Description

As previously mentioned above, with the usual techniques, the distribution of loads in the metallic elements, and therefore the total resistance of the joint, will be ineffective due to the overload of the central metallic elements and the relaxation of the metallic elements. sides.

To achieve this, the transition laminate must be designed to optimize the transmission of loads and not based on the loads to be supported, which is usual in the state of the art.

An object of the invention is the design of the hybrid laminate along the length and width of the transition, which allows flattening the load distribution reached by the metal elements of the blade joint in the preform of the laminates with increased width used in a modular blade.

It is another object of the invention to achieve the most optimized design based on the length of the laminate width transition, between the area of the blade cap and the area of the joint, and the angle $\alpha$ that defines this transition.

From all this the following advantage emerges: It is possible to adjust the way the load reacts in the joint section, making:

1. Where it behaves as a flat section, because the transitions between the connection area and the blade cap area are smooth, adjusting its deformation along its width and causing the load distribution per element to be flatten and its most loaded element (dimensional of the entire joint) reduce its load. For this, the ratio of elastic moduli $E_{2int}$ /$E_{2'ext}$ must be established in the range of 40%-60%.

2. Where it does not behave as a flat section due to three-dimensional effects induced by strong transitions in width between the connection area and the blade cap area, adjusting its deformation along its width and making the load distribution by element is more effective, overloading the lateral elements (with less load) and unloading the central elements (with greater load and therefore sizing the joint). For this, the ratio of elastic moduli $E_{2int}$ /$E_{2'ext}$ must be established in the range of 60%-80%.

Brief description of the drawings

A brief description will be given below for a series of drawings useful for better understanding the invention and that expressly relate to an embodiment of said invention that is presented as a non-limiting example thereof.

Figure 1a shows a blade in plan with the integration of the joint, figure 1b is the section of the joint, showing the comparison of widths between the cap area and the joint area, and figure 1c the transition of said widths of panel.

Figures 2a, 2b and 2c show a second embodiment with the blade joint in a different place, with a much more relevant panel width transition.

Figure 3a shows the joint area with its sectioned laminates, Figure 3b shows the load distribution in the joint elements and the corresponding force reaction curve.

Figures 4a and 4b show the improved joint zone, its load distribution and its new load distribution curves. Figure 5 represents another alternative.

Detailed description

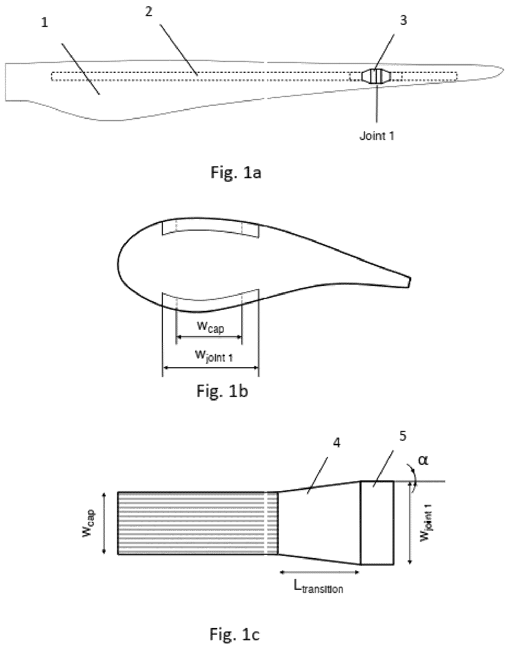

As shown in Figure 1a, the area where the connection of a modular blade (1) can be established can be selected closer to the root or closer to the tip. Each selected location requires an integration between the cap (2) of the blade, generally with the same width along the entire length of the blade, and the increase in the width of the cap (joint area), necessary to accommodate the metal elements of the joint, and which can be generated by increasing its lamination, or by using a preform (3).

Figure 1b shows the width of the cap ($W_{cap}$) with little difference compared to the width of the joint ($W_{joint\,1}$) for places close to the tip of the blade and is the joint called Joint 1 in the previous figure.

Figure 1c shows the width transition between the cap ($W_{cap}$) and the joint zone ($W_{joint\,1}$) is defined by the angle $\alpha$, which is defined as a design criterion of the joint, typically in the range of 5 to 10° for this type of transitions. By having a panel width ratio (joint and blade cap) close to 1, the resulting transition is relatively short. The cap (2) is formed by mainly unidirectional UD composite material. The joint area (3) must house the metal elements necessary to withstand the stresses of the joint and therefore has larger dimensions with a transition part (4) and a joining part (5). The transition part (4) has a length called ($L_{transition}$).

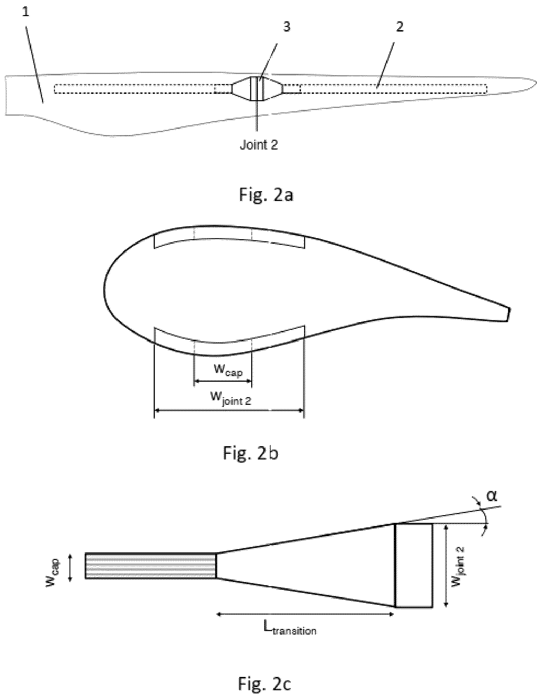

Figure 2a shows that there are sections in which the difference in width between the cap (2) and the joint area is more pronounced (3), when it is established in intermediate places of the blade (1).

The widths are detailed in Figure 2b. The width of the cap ($W_{cap}$) remains the same and the joint area ($W_{joint\,2}$) is wider, given the greater number of metal joining elements that it has to accommodate, being in a blade area with higher loads. It is the union called Joint 2 in the previous figure.

Figure 2c shows the transition of cap widths ($W_{cap}$) to the joint area ($W_{joint\,2}$) in this case, maintaining the same $\alpha$ by design criterion. The transition length ($L_{transition}$) is greater than in the previous embodiment, since the increase in width of the joint is significantly greater.

The formula that governs the transition between the cap ($W_{cap}$) and the joint zone ($W_{joint\,1}$, $W_{joint\,2}$) is the following:

$$L_{transition} = 0,5\,(W_{joint} - W_{cap})\,\tan^{-1}(\alpha).$$

Wherein:

$L_{transition}$ is the length of the laminate width transition (4),
$W_{joint}$ is the width of the joints ($W_{joint\,1}$, $W_{joint\,2}$),
$W_{cap}$ is the width of the cap, and
$\alpha$ is the width reduction angle that the laminate has at the transition.

Thus, the transition length is equal to one-half the width of the joint minus the width of the cap, divided by the tangent of $\alpha$.

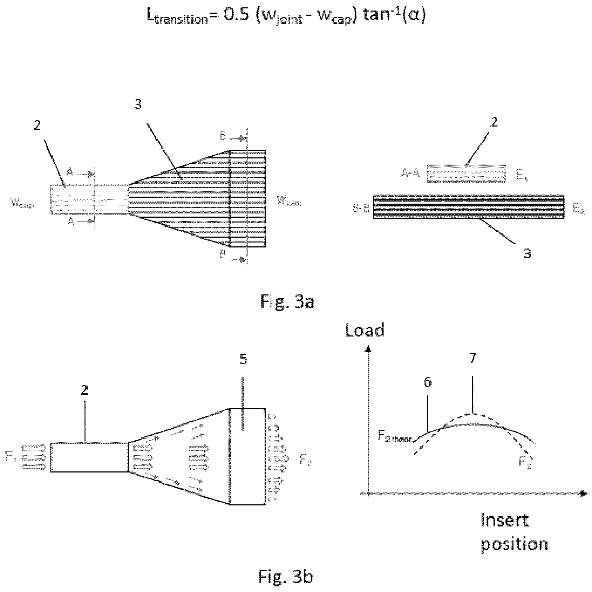

Figure 3a shows a plan view with the cap (2) sectioned according to AA and the joint area (3) sectioned according to BB. The cap has a material with an elastic modulus E1 and the laminate in the joining area (3) is made with a material with an elastic modulus E2.

Figure 3b shows how the width of the joint ($W_{joint}$) (5) means that the load ($F_1$) received from the cap laminate tends to go predominantly through the central elements that are aligned with it (2), instead of by the lateral elements. The load is transferred by shear from the center of the laminate to the end elements, so that if it does not have sufficient transition length, it reaches the corners in a more diminished manner than through the center (F2).

This makes the real load reaction curve of $F_2$ (7) different from the theoretical curve $F_{2theor}$ (6), which would be defined by the geometry of the blade in this area and the hypothesis of deformation of the beam with a flat cross section (Navier hypothesis). The central elements have an overload with respect to the theoretical load, while those in the corners receive less load. This limits the load transfer capacity of the joint, since it will be limited by the maximum allowable load per element, which limits the capacity of the central elements. Furthermore, this situation represents a loss of efficiency of the lateral elements, which means that their full potential cannot be used and their number must be increased to maintain the load-carrying capacity of the section.

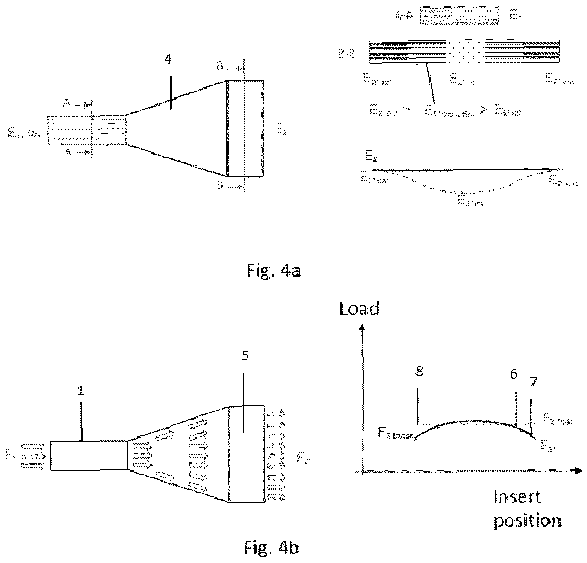

Figure 4a shows the behaviour of the sectioned cap AA and the joining area when its lamination is carried out with a non-homogeneous lamination sequence along its width, providing it with variable rigidity along the width, adding in the center a lower modulus material than on the sides so that the load transfer is more uniform. In the end area, a laminate with a higher modulus of elasticity $E_{2'ext}$ is maintained (typically unidirectional carbon or glass fiber) while in the center the number of high modulus layers is lowered and those of low modulus are gradually increased (typically biaxial glass fiber or unidirectional glass fiber in the case of carbon fiber laminates) to decrease the elastic modulus $E_{2'int}$. In the area between the two, a laminate transition is defined, giving a module transition area between both ends $E_{2'transition}$. The solid line shows the elastic modulus $E_2$ of the previous embodiment, with uniform lamination, and the current elastic modulus is shown in the dashed line, varying along the width of the piece.

Figure 4b shows the new load distribution according to the hybrid laminate where its rigidity has been adjusted in width. By adjusting the rigidity of the laminate, the theoretical load curve (6) of $F_{2theor}$ and the real curve (7) of $F_{2'}$ are superimposed, improving the capacity of the joint. This is achieved with a ratio of elastic moduli $E_{2int}$ /$E_{2'ext}$ in the range of 40%-60%. Furthermore, taking this laminate stiffness adjustment to greater differences (ratio of elastic moduli $E_{2int}$ /$E_{2'ext}$ in the range of 60%-80%), the total flattening of the curve (8), called $F_{2limit}$, would be achieved. This would significantly improve the behaviour of the joint, being able to extract the maximum of the individual load passing capacity of each joint element, with the consequent optimization in their number and in the size and cost of the joint. In this case, the section of the joint would no longer deform with a flat section (Navier's law), not due to an unintended three-dimensional effect caused by the width transition, but rather due to the design effect of the laminate's stiffness which was the objective of the blade designer.

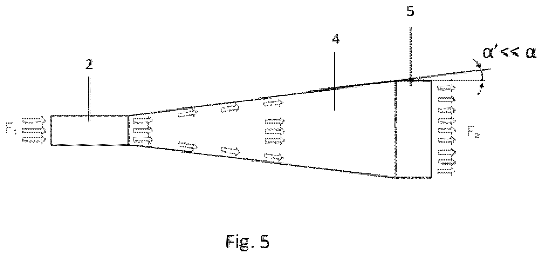

Figure 5 shows a natural alternative to achieve a correct transfer of load from the cap to the joint area, making a very long transition. To ensure that the load is correctly transferred by shear to the lateral elements with laminate of uniform rigidity, the angle of the joint, $\alpha'$, must be greatly reduced (of the order of 2° to 3°), and therefore the length of the transition must be lengthened.

This solution results in very long lamination transitions, and is therefore very inefficient in weight and cost. On the contrary, the solution proposed with the non-homogeneous laminate allows the reduction of the piece length (larger $\alpha$ angles), together with the increase in the efficiency of the lateral elements, which represents a significant reduction in the weight and cost of the union.

## Claims

1. Transition of composite laminates for a modular blade, between a laminate of the cap (2) and a laminate of the joining area (5), which houses its metallic parts inside, **characterized by** having a non-homogeneous hybrid laminate along its width, with a distribution of variable rigidity along it, with an area at the ends where the modulus of elasticity has a first value ($E_{2'ext}$) and an area in the center where the modulus of elasticity has a second value ($E_{2'int}$), the second value ($E_{2'int}$) being lower than the first value ($E_{2'ext}$) and by having a length ($L_{transition}$) variable with respect to the cap width ($W_{cap}$), the width of the joint ($W_{joint}$), and an angle ($\alpha$) which is the width reduction angle that the laminate has at the transition.

2. Transition of laminates according to the first claim, wherein the sides of the non-homogeneous laminate are an area with high density of unidirectional glass or carbon fiber and the center of the non-homogeneous laminate is an area where biaxial glass fiber predominates or unidirectional glass fiber in the case of carbon fiber laminates at the sides.

3. Transition of laminates according to the first claim, **characterized in that** the non-homogeneous hybrid laminate flattens the load distribution per element (7) $F_2$, overlapping it with the theoretical load distribution per element (6) $F_{2theor}$ through a relationship of elastic modules $E_{2int}$ /$E_{2'ext}$ in the range of 40%-60%.

4. Transition of laminate according to the first claim, **characterized by** flattening the load distribution per element (8) bringing it closer to the $F_{2limit}$ through a ratio of elastic modules $E_{2int}$ /$E_{2'ext}$ in the range of 60%-80%.

5. Transition of laminate according to the first claim, **characterized in that** the angle $\alpha$ is in the range of 5 to 10°.

## Patentansprüche

1. Übergang von Verbundlaminaten für ein modulares Rotorblatt, zwischen einem Laminat des Gurtes (2) und einem Laminat des Verbindungsbereichs (5), der seine metallischen Teile im Inneren aufnimmt, dadurch gekennzeichnet, dass es sich über die Breite um ein inhomogenes hybrides Laminat mit variabler Steifigkeitsverteilung handelt, mit einem Bereich an den Enden, in dem das Elastizitätsmodul $E_{2'ext}$ sehr hoch ist, und einem Bereich in der Mitte, in dem das Elastizitätsmodul $E_{2'int}$ sehr niedrig ist, sowie dadurch, dass es eine Länge ($L_{transition}$) aufweist, die in Abhängigkeit von der Gurtbreite ($W_{cap}$), der Verbindungsbreite ($W_{joint}$) und dem optimalen Konstruktionswinkel zur Lastübertragung $\alpha$ variabel ist.

2. Übergang von Laminaten nach Anspruch 1, dadurch gekennzeichnet, dass das inhomogene hybride Laminat, bei dem die unidirektionale Kohlenstoff oder Glasfaser durch biaxiale Glasfaser oder unidirektionale Glasfaser im Falle von Kohlenstofffaserlaminaten ersetzt ist, an den Seitenbereiche eine hohe Dichte unidirektionaler Fasern aufweist und im Zentrum biaxiale Glasfasern bzw. unidirektionale Glasfasern im Falle von kohlenstofffaserlaminaten überwiegen.

3. Übergang von Laminaten nach Anspruch 1, dadurch gekennzeichnet, dass das inhomogene hybride Laminat die Lastverteilung pro Element (7) $F_2$ abflacht, indem es sie mit der theoretischen Lastverteilung pro Element (6) $F_{2theor}$ überlagert, durch ein Verhältnis der Elastizitätsmodule $E_{2int}$ / $E_{2'ext}$ im Bereich von 60 % bis 80 %.

4. Übergang von Laminatbreiten nach Anspruch 1, dadurch gekennzeichnet, dass die Lastverteilung pro Element (8) abgeflacht und an $F_{2limit}$ angenähert wird, durch ein Verhältnis der Elastizitätsmodule $E_{2int}$ / $E_{2'ext}$ im Bereich von 40 % bis 60 %.

5. Übergang von Laminatbreiten nach Anspruch 1, dadurch gekennzeichnet, dass der Winkel a im Bereich von 5 bis 10 ° liegt.

## Revendications

1. Transition de stratifiés composites pour une pale modulaire, entre un stratifié du longeron (2) et un stratifié de la zone d'assemblage (5), qui loge ses parties métalliques à l'intérieur, **caractérisée en ce qu'**elle comporte un stratifié hybride non homogène sur sa largeur, présentant une distribution de rigidité variable, avec une zone aux extrémités où le module d'élasticité $E_{2'ext}$ est très élevé et une zone au centre où le module d'élasticité $E_{2'int}$ est très faible, et **en ce qu'**elle présente une longueur ($L_{transition}$) variable par rapport à la largeur du longeron ($W_{cap}$), à la largeur de la jonction ($W_{joint}$) et à l'angle de conception optimal pour transférer la charge $\alpha$.

2. Transition de stratifiés selon la revendication 1, **caractérisée en ce que** le stratifié hybride non homogène comprend une fibre de carbone ou de verre unidirectionnelle remplacée par une fibre de verre biaxiale ou une fibre de verre unidirectionnelle dans le cas de stratifiés en fibre de carbone, les côtés constituant la zone à forte densité de fibres unidirectionnelles et le centre la zone où prédomine la fibre de verre biaxiale ou la fibre de verre unidirectionnelle dans le cas de stratifiés en fibre de carbone.

3. Transition de stratifiés selon la revendication 1, **caractérisée en ce que** le stratifié hybride non homogène homogénéise la distribution de charge par élément (7) $F_2$, en la superposant à la distribution de charge théorique par élément (6) $F_{2theor}$, au moyen d'un rapport de modules d'élasticité $E_{2int}$ / $E_{2'ext}$ compris entre 60 % et 80 %.

4. Transition de largeurs de stratifié selon la revendication 1, **caractérisée en ce qu'**elle homogénéise la distribution de charge par élément (8), en la rapprochant de $F_{2limit}$, au moyen d'un rapport de modules d'élasticité $E_{2int}$ / $E_{2'ext}$ compris entre 40 % et 60 %.

5. Transition de largeurs de stratifié selon la revendication 1, **caractérisée en ce que** l'angle $\alpha$ est compris entre 5 et 10 °.

1   2   3

Joint 1

Fig. 1a

$W_{cap}$

$W_{joint\ 1}$

Fig. 1b

4   5   α

$W_{cap}$   $W_{joint\ 1}$

$L_{transition}$

Fig. 1c

Fig. 2a

Fig. 2b

Fig. 2c

$$L_{transition} = 0.5 \, (w_{joint} - w_{cap}) \tan^{-1}(\alpha)$$

Fig. 3a

Fig. 3b

Fig. 4a

Fig. 4b

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1664528 A
- EP 2507508 A
- EP 176170 A
- WO 2020119874 A1
- US 2014271198 A1